# EUROPEAN PATENT APPLICATION

(11) **EP 2 722 744 A1**
(43) Date of publication of application: **23.04.2014**
(21) Application number: 12188655.0
(22) Date of filing: 16.10.2012
(51) Int. Cl.: G06F 3/0488

(54) **Method for generating a graphical user interface.**

(71) Applicant: Advanced Digital Broadcast S.A., 1292 Geneva (CH)
(72) Inventor: Wielgosz, Marcin, 65-119 Zielona Gora (PL)
(74) Representative: Blonski, Pawel

(57) **Abstract**

A method for generating a graphical user interface object, the method comprising the steps of awaiting a user's gesture input from a gesture input interface; providing information listing at least one gesture type wherein at least two threshold values of at least one parameter are assigned to the given gesture type; verifying whether the input gesture matches a parameterized gesture type; in case the verification confirms that the input gesture matches a parameterized gesture type, extracting the gesture type and the gesture parameter's value from a gesture event notification; identifying an associated action based on the gesture type and parameter; and generating an output signal with a differently configured graphical user interface object content dependent on the gesture type and the gesture parameter.

## Description

The present invention relates to a method for generating a graphical user interface. The invention has its preferred, but not exclusive, application to an interactive multi-channel television set top box (STB) for selecting content items from a variety of different sources such as digital television broadcast channels, pre-recorded content (such as recordings, music, images) and the Internet (such as but not limited to video streaming, audio streaming, electronic mail or word wide web).

Recent advances in software technology and wide spread of computer devices with graphical user interface (GUI) have greatly increased the number of available options within personal computers, interactive television systems, smartphones, and other computer information systems displaying GUI and being operated via GUI interaction. For instance, current STB systems offer hundreds of broadcast channels and a variety of interactive options, including electronic mail, videoconferencing, social networking applications, instant messaging applications, Internet browsing software and external media browsing (such as video, music, or images).

Prior art of United States Patent 20080316183 entitled - "SWIPE GESTURES FOR TOUCH SCREEN KEYBOARDS" discloses a method of interpreting swipe gesture input to a device having a touch-sensitive input.

The touch-sensitive input can include a virtual keyboard area, in which taps of a touch object generate text input. The method can include detecting a swipe gesture across the virtual keyboard, determining a direction of the swipe gesture, and performing a predetermined function determined by the direction of the swipe gesture. A swipe gesture can include a touchdown of a touch object followed by a sliding motion of the touch object across the virtual keyboard.

Detecting a swipe gesture can include acquiring touch image data from the touch-sensitive device, processing the image to generate one or more finger path events, determining a displacement of the one or more finger path events, and detecting a swipe gesture if the displacement exceeds a predetermined threshold. If the displacement does not exceed the threshold, the input can be interpreted as a conventional tap. The time of the motion associated with the input can also be compared to a maximum swipe gesture timeout threshold. If the timeout threshold is exceeded, the input can be interpreted as a conventional tap.

The '183 publication distinguishes events and assigns to these events completely different actions. For example, by tapping on the area corresponding to a letter on virtual keyboard, the letter is entered in text field while a single-finger leftward swipe could be used to invoke a backspace key. Hence the '183 solution is able to distinguish between gesture types and assign different actions to the respective gesture types.

The '183 solution does not offer to select an action and to configure the respective action by means of a gesture.

It would thus be advantageous to provide a new and improved method for generating a graphical user interface object. Such improved method shall be easier to use and allow quick access to selecting an action and to configure the respective action by means of a gesture.

The object of the invention is a method for generating a graphical user interface object, the method comprising the steps of awaiting a user's gesture input from a gesture input interface; providing information listing at least one gesture type wherein at least two threshold values of at least one parameter are assigned to the given gesture type; verifying whether the input gesture matches a parameterized gesture type; in case the verification confirms that the input gesture matches a parameterized gesture type, extracting the gesture type and the gesture parameter's value from a gesture event notification; identifying an associated action based on the gesture type and parameter; and generating an output signal with a differently configured graphical user interface object content dependent on the gesture type and the gesture parameter.

Preferably, the differently configured graphical user interface object content is a different number of presented options or a different number of presented information icons or a different size of the object.

Preferably the at least two threshold values are all related to length or angle or slope.

Preferably, the graphical user interface object is a television channel banner.

A further object of the invention is a computer program comprising program code means for performing all the steps of the method, according to the method of the present invention, when said program is run on a computer.

Another object of the present invention is a computer readable medium, storing computer-executable instructions performing all the steps of the computer-implemented method according to the method of the present invention, when executed on a computer.

The method arrangement according to the invention allows for improved navigation and improves readability of the GUI. The method does not require as many navigation commands from the user, as prior art methods, and makes the GUI simpler.

The object of the invention is shown, by means of exemplary embodiments, on a drawing, in which:
Fig. 1 depicts a block diagram of a set-top box system according to the present invention;
Fig. 2 presents a graphical user interface screen, according to the present invention, in a first state;
Fig. 3 shows a graphical user interface screen, according to the present invention, in a second state;
Fig. 4 presents a graphical user interface, according to the present invention, screen in a third state;
Fig. 5 presents a diagram of the method steps according to the present invention; and
Fig. 6 depicts examples of gestures and gesture parameters.

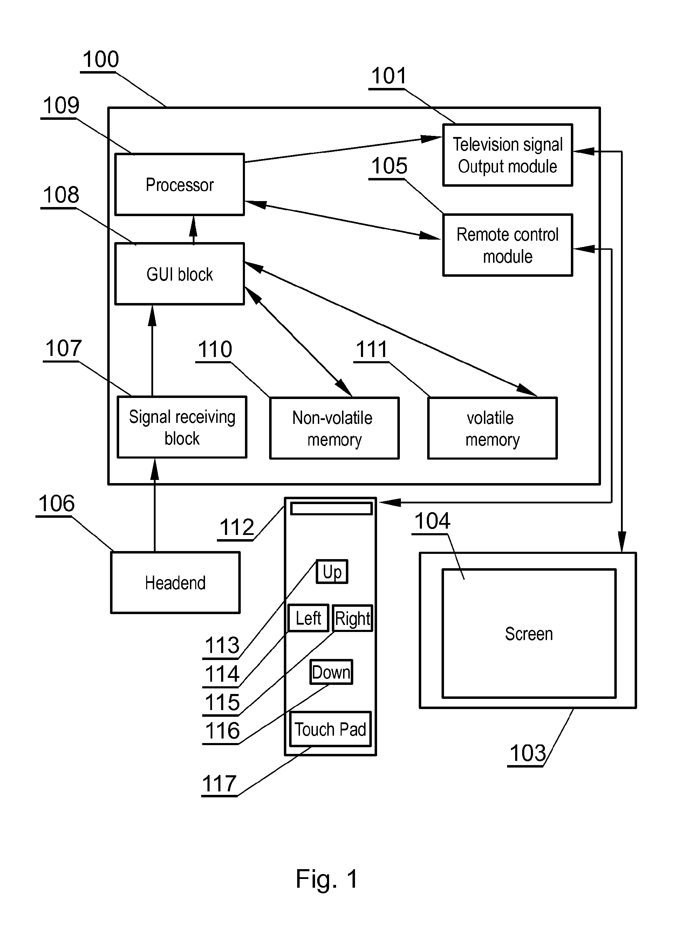

FIG. 1 depicts a block diagram of a set-top box system 100 according to an embodiment of the present invention. In one configuration, the set-top box system 100 includes a television signal output module connected 101 to a display device 103 having a display screen 104 (Such as an LCD or OLED). Typically, connection with an external display device is effected by means of a SCART connection or a HDMI connection.

The set-top box (STB) 100, is controlled with a remote control unit 112 (RCU) connected to a remote control module 105. The remote control 112 is typically connected to the remote control module 105 by means of a wireless infrared connection (or other RF connection), which in certain embodiments may be either unidirectional or bidirectional.

In addition, the remote control 112 may include a number of functional buttons or other similar controls. Typically, a set of directional buttons is present on a remote control 112, namely an "Up" button 113, a "Down" button 116, a "Left" button 114, a "Right" button 115. The remote control 112 may also comprise a touch input device 117 such a touch pad or a touch screen. In other embodiments such remote controller 112 may be a smartphone or a tablet. The touch screen (also known as a touch-sensitive display) may be any suitable type, such as a capacitive, resistive, infrared, or surface acoustic wave (SAW) touch-sensitive display, as known in the art. In another embodiment, the remote control unit 112 may comprise only the touch input device 117.

The STB 100, is an intermediate device between a headend 106 (for example IPTV, Terrestrial, Satellite or Cable) and a display device 103, which may also be built-in device in the STB 100. Alternatively small-sized STBs 100 may be integrated into large TV displays.

The headend 106, transmits to the STB 100, signals comprising various data such as television or radio data. The data are received by means of a signal reception block 107, which in a typical embodiment will comprise a demultiplexer, descrambler and a decoder. The STB 100, receives data and processes the same for display on the display screen 103. The STB 100, may also include hardware and software for presenting a graphical user interface (GUI) 108 on the display screen 103 for operating the various functions and services provided by the STB 100.

The processor 109, cooperates with the GUI block 108 in order to generate an present GUI by means of the television signal output module 101. The processor 109, is bidirectionally connected to various types of memories such as non-volatile memory 109 (eg. Flash, HDD) and volatile memory 110 (eg. RAM). The software for presenting a graphical user interface (GUI) is stored in these memories as computer executable instructions that are to be processed by the processor 109. Further, the memories store graphical data related to the graphical user interface.

As explained, the STB 100, typically provides access to a plurality of selectable options by means of a GUI. The typical options are channels, programs, applications, digital media files, web pages, e-mail programs, chat clients, personal video recorder (PVR) applications, and the like. Furthermore, modern STBs 100, typically store or provide access to stored digital recordings, photographs, audio files, video streaming, interactive games or other forms of digital media.

The present technical concept will now be presented with respect to a channel banner. However, it shall be noted that it is applicable to any other GUI items such as dialog windows, message windows, menus etc. A channel banner typically comprises a plurality of fields and/or icons that present data related to current context of television viewing experience. For example, when a viewer tuned to a given television channel he may subsequently invoke a channel banner overlay. The channel banner will typically comprise information on current and future events on this particular channel as well as prompts (such as availability of time shift function, recording etc.) corresponding with at least one function related to the at least one channel and/or event that is tuned to.

The channel banner may be called by means of a gesture input to the system. In case the remote control 112 also comprises a touch input device 117 such a touch pad or a touch screen, the user may control the GUI by means of gestures. Such control method becomes increasingly popular in television environments.

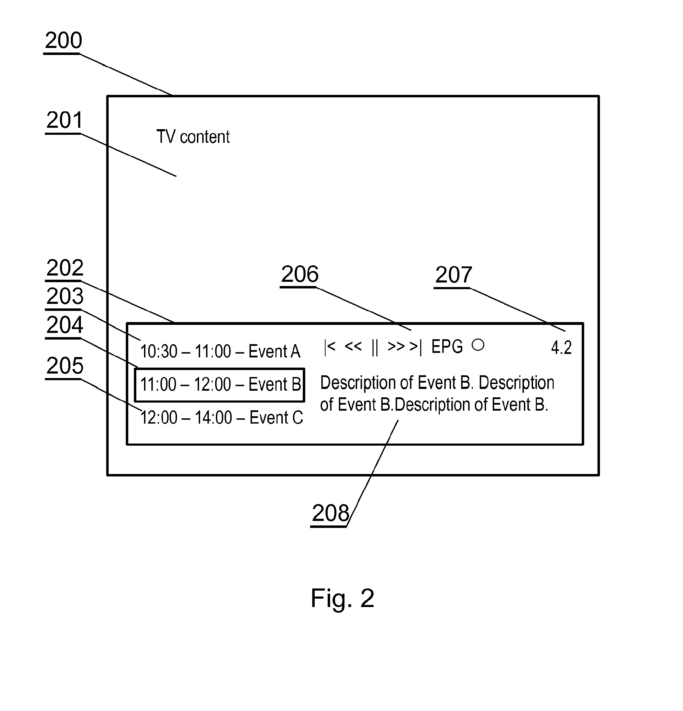

Fig. 2 presents a graphical user interface screen, in a first state, wherein such banner is an extended GUI component typically displayed by set-top boxes. The channel banner 202 is displayed typically as an overlay OSD layer (On Screen Display) over television content 201 and both are presented on a display 200.

The channel banner object 202 typically comprises a listing of events available on the currently tuned television channel - the events are typically current 203 and future 205, in some case also past events are present 203. Further, the channel banner 202 may comprise an extended description 208 of the selected 204 event. This description usually takes a lot of space on the channel banner or in some cases is displayed in a separate overlay. Additionally, the channel banner may comprise information on rating 207 of the current event 203 and similar information related to the currently presented television content. Another possible information, displayed by means of the channel banner, is icons identifying, which actions may be currently executed with respect to the currently viewed event. In the example of 206 a viewer may restart, rewind, pause, fast forward, advance to the end, display Electronic Program Guide (EPG) or record the event in non-volatile memory for future viewing.

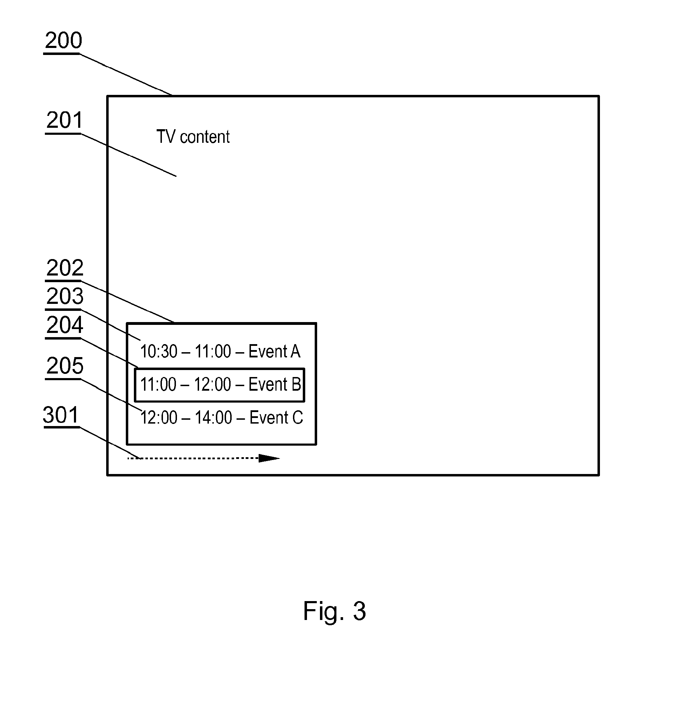

Fig. 3 presents a graphical user interface screen, in a second state, wherein a version of the channel banner 202 in a minimum setup is presented. This version significantly differs from the full version presented in Fig. 2. Fewer user interface options are presented i.e. fewer items and/or icons and/or buttons and/or descriptions of the foregoing etc.

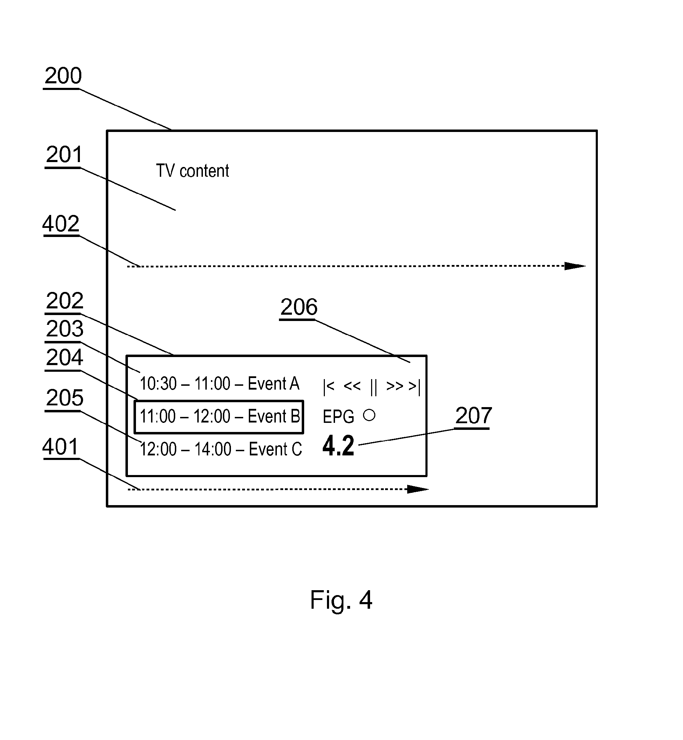

Fig. 4 presents a graphical user interface screen, in a third state, wherein a version of the channel banner 202 in a medium setup is presented. This version significantly differs from the full version presented in Fig. 2 as well as from the minimum version presented in Fig. 3.

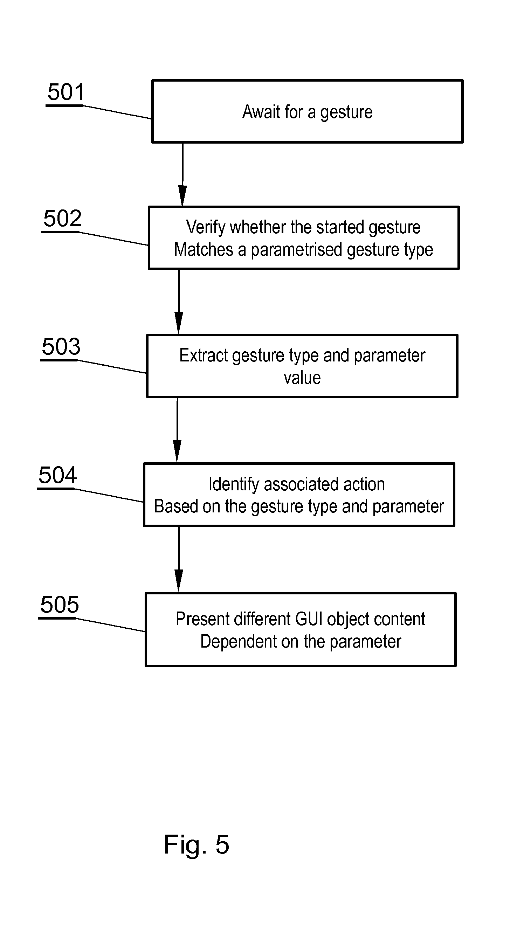

Fig. 5 schematically presents a block diagram of the method according to the present invention. The method starts at step 501 where there is executed a process of awaiting a user's gesture input. Preferably, the gesture is a geometric shape such as a straight line, an arc, a horizontal straight line, a vertical straight line, a curve etc. In principle, any shape that may be virtually drawn as an input to the touch input device 117 is acceptable for the purpose of the present technical concept.

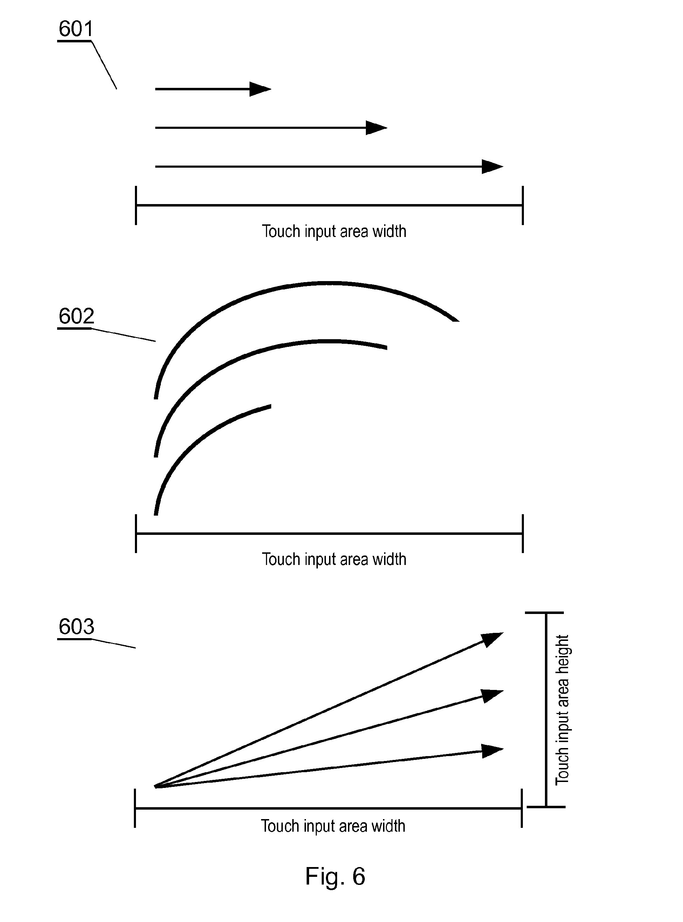

A gesture may have associated parameter. For example in case of a straight line gesture type the parameter may be the length of the line while in case of an arc gesture type the parameter may be an angle whereas in case of an angled line gesture type the parameter may be the slope of the line with respect to a horizontal line. Examples of gestures and parameters have been depicted in Fig. 6. Example 601 refers to a length parameter, example 602 refers to an angle parameter (or possible angle in combination with length), while example 603 refers to slope parameter as shown by means of three different possible input gestures for each of the examples depicted.

The system stores, in the nonvolatile memory 110, a reference database wherein a gesture has associated different events to gestures in dependence on gesture parameters. Alternatively a running application receives notification about a gesture event and then obtains parameters of the gesture in order to define actions based on the value of the gesture parameter.

Next, at step 502, the method verifies whether the started gesture matches a parameterized gesture type (a type of gesture is usually closely related to touch input patch on the touch sensitive area). It is to be noted that an application that controls GUI or the operating system shall have access to information listing at least one gesture type wherein at least two threshold values of a parameter are assigned to the given gesture type. For example, as shown in Fig. 6 in the embodiment of 601 there is a gesture type of a horizontal line with parameters threshold for example at greater than 25%, greater than 50% and greater than 75% of touch input area width.

If the verification confirms that the started gesture matches a parameterized gesture type, the process advances to step 503. At step 503 gesture type and parameter value are extracted from the event notification.

Subsequently, at step 504, there is identified an associated action based on the gesture type and parameter. For example, a gesture of 301 (extending in a horizontal manner for about one third of the touch area width or screen width) shall invoke a channel banner 202 of Fig. 3 while a gesture of 401 (extending in a horizontal manner for about two thirds of the touch area width or screen width) shall invoke a channel banner 202 of Fig. 4. In case the gesture extends in a horizontal manner for about substantially full touch area width or screen width, the application may invoke a full channel banner 202 of Fig. 2.

The final step 505, of the process is to present (or generate only) differently configured GUI object content dependent on the parameter. In particular, three different versions of the channel banner may be presented depending on parameters of the input gesture. Each of the different versions differs in GUI object size and/or the number of presented options or information.

As can be seen in Figures 2 to 4, the look and feel of the channel banner differs depending on the touch gesture parameter, while the touch gesture type remains the same as exemplified in Fig. 6. Therefore the method as described offers a GUI user a convenient way to select an action (eg. Presentation of a channel banner) and to configure the respective action by means of a gesture (eg. By varying the length of the gesture).

The methods and systems as described above can be implemented in a computer system, and performed or controlled by one or more computer programs. Such computer programs are typically executed by utilizing the computing resources of a processing unit which can be embedded within various video signal receivers, such as personal computers, personal digital assistants, cellular telephones, receivers and decoders of digital television, video display units or the like.

The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation, in the foregoing specification, do not imply any limitation on the invention whatsoever. It will, however, be evident that various modifications and changes may be made thereto without departing from the broader scope of the presented technical concept.

The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for generating a graphical user interface object, the method comprising the steps of:
○ awaiting a user's gesture input (501) from a gesture input interface (117);
the method being **characterized in that** it further comprises the steps of:
○ providing information listing at least one gesture type wherein at least two threshold values of at least one parameter are assigned to the given gesture type;
○ verifying (502) whether the input gesture matches a parameterized gesture type;
○ in case the verification (502) confirms that the input gesture matches a parameterized gesture type, extracting (503) the gesture type and the gesture parameter's value from a gesture event notification;
○ identifying (504) an associated action based on the gesture type and parameter; and
○ generating (505) an output signal with a differently configured graphical user interface object content dependent on the gesture type and the gesture parameter.

2. The method according to claim 1, **characterized in that** a differently configured graphical user interface object content is a different number of presented options or a different number of presented information icons or a different size of the object.

3. The method according to claim 1, **characterized in that** the at least two threshold values are all related to length or angle or slope.

4. The method according to claim 1, **characterized in that** the graphical user interface object is a television channel banner.

5. A computer program comprising program code means for performing all the steps of the method according to any of claims 1-4 when said program is run on a computer.

6. A computer readable medium storing computer-executable instructions performing all the steps of the computer-implemented method according to any of claims 1 to 4 when executed on a computer.
